(19) Europäisches Patentamt
European Patent Office
Office européen des brevets

(11) Publication number: 0 312 915
A2

(12) # EUROPEAN PATENT APPLICATION

(21) Application number: 88117053.4

(51) Int. Cl.4: C07F 9/146

(22) Date of filing: 13.10.88

(30) Priority: 19.10.87 US 110181

(43) Date of publication of application:
26.04.89 Bulletin 89/17

(84) Designated Contracting States:
AT BE CH DE ES FR GB GR IT LI LU NL SE

(71) Applicant: ETHYL CORPORATION
Ethyl Tower 451 Florida Boulevard
Baton Rouge Louisiana 70801(US)

(72) Inventor: Ao, Meng-Sheng
5443 Lost Oak Drive
Baton Rouge Louisiana 70817(US)
Inventor: Burton, Lester Percy J.
17321 Monitor Avenue
Baton Rouge Louisiana 70817(US)

(74) Representative: Dipl.-Ing. Schwabe, Dr. Dr. Sandmair, Dr. Marx
Stuntzstrasse 16
D-8000 München 80(DE)

(54) **Process for making cyclic aryl chlorophosphites.**

(57) Cyclic chlorophosphites of ortho-bridged phenols are made by reaction of an ortho-bridged bisphenol with $PCl_3$ in an inert solvent using a catalytic amount of a tert-amine hydrochloride such as pyridine hydrochloride to promote the reaction.

EP 0 312 915 A2

# PROCESS FOR MAKING CYCLIC ARYL CHLOROPHOSPHITES

Reaction of $PCl_3$ with aromatic hydroxy compounds is known. The reaction evolves HCl and it is also known to include a stoichiometric amount of a base such as triethylamine as an HCl acceptor. A major problem with this technique is that a large amount of hydrochloride salt is formed which must be removed.

It is also known to make triaryl phosphites by the reaction of $PCl_3$ with an aryl hydroxide using an amine, ammonium salt or amine catalyst (Maul et al. U. S. 4,312,818 and U. S. 4,440,696). Pyridine and alpha-picoline have a low catalytic effect.

A special problem arises when the desired product is a diaryl monochlorophosphite. In this case the art teaches the use of at least a stoichiometric amount of amine as an HCl scavenger (Shepard et al. U. S. 3,281,506).

Preparation of cyclic ortho-bridged bisphenol chlorophosphites are also taught to require the use of at least a stoichiometric amount of amine HCl scavenger (Odorisio et al., Phosphorus and Sulfur, 1983, Vol. 15, pp. 9-13; Odorisio et al., Phosphorus and Sulfur, 1984, Volume 19, pp. 1-10 and pp. 285-293).

Cyclic bisphenol chlorophosphites are intermediates in the synthesis of cyclic bisphenol fluorophosphites which have been found to be very effective hydrolytically stable antioxidants in polyolefins, especially in combination with known phenolic antioxidants. One such fluorophosphite of exceptional effectiveness is 2,2′-ethylidenebis(4,6-di-tert-butylphenyl) fluorophosphite.

It has now been discovered that the reaction of an ortho-bridged bisphenol with $PCl_3$ to form a cyclic monochlorophosphite can be promoted by adding only a catalytic amount of a tert-amine such as pyridine or a pyridine type compound or HCl complex thereof to the reaction mixture.

A preferred embodiment of the invention is a process for making a cyclic chlorophosphite, said process comprising reacting phosphorus trichloride with a 2,2′-bridged bisphenol in an inert solvent and in the presence of a catalytic amount of a tert-amine or hydrogen chloride complex thereof.

The process can be conducted in a number of inert solvents and can even be conducted using excess $PCl_3$ as the solvent. Inert solvents include aliphatic hydrocarbons such as hexane, cyclohexane, heptane, isooctane and the like, including mixtures thereof.

The more preferred inert solvents are the aromatic solvents which boil in the range of 80-176°C. These include benzene, xylene and mesitylene, including all isomers and all mixtures of isomers and solvents.

Halogenated solvents such as carbon tetrachloride, 1,2-dichloroethane, methylenebromide, 1,1,2-trichloro ethane, chlorobenzene, dichlorobenzene and the like can be used as solvents.

The most preferred solvents are toluene and xylene and mixtures thereof.

The amount of solvent should be an amount that will dissolve the reactants. A useful amount is 50-500 parts by weight solvent per 100 parts of bisphenol.

The process is applicable to any ortho-bridged bisphenol including substituted and unsubstituted bisphenols. The bridge may be a direct bond between an ortho position on each phenolic benzene ring or it may be a bridge through a bridging group such as alkylene, alkylidene, thio, polythio, $-CH_2SCH_2-$ and the like.

Examples of suitable bisphenols are 2,2′-bisphenol, 2,2′-bis(4-methyl-6-tert-butyl)phenol, 2,2′-bis(4-chloro-6-tert-butylphenol), 2,2′-bis(4-methoxy-6-isopropylphenol), 3,5-di-tert-butyl-2,2′-dihydroxy-3′,5′-di-sec-pentylbiphenol, 2,2′-bis(4-bromophenol), 2,2′-thiobis(4-methyl-6-tert-butylphenol), 2,2′-(4,6-di-tert-butylphenol), di-(3-methyl-5-tert-butyl-6-hydroxybenzyl)sulfide, 2,2′-bis[4-methyl-6(alpha-methylbenzyl)phenol], 2,2′-dithiobis[4,6-di(alpha-methylbenzyl)phenol] and the like.

The more preferred bisphenols are those having the structure

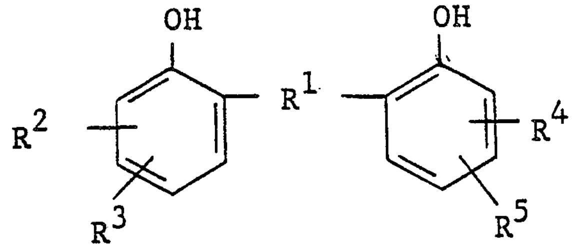

wherein $R^1$ is a divalent hydrocarbon bridge containing 1-6 carbons or is absent forming a direct bond

between the benzene rings and $R^2$ and $R^4$ are selected from alkyl groups containing 1-12 carbon atoms, cycloalkyl groups containing 5-8 carbon atoms and arylalkyl groups containing 6-12 carbon atoms and $R^3$ and $R^5$ are selected from hydrogen and the $R^4$ groups.

Representative examples of these preferred bisphenols are 2,2′-methylenebis(3-methyl-6-tert-butylphenol), 2,2′-methylenebis(4-methyl-6-tert-butylphenol), 2,2′-methylenebis(4-methyl-6-sec-dodecylphenol), 2,2′-ethylidenebis(4-methyl-6-cyclopentylphenol), 2,2′-isopropylidenebis(4-6-di-cyclohexylphenol), 2,2′-butylidenebis(4-methyl-6-cyclooctylphenol), 2,2′-hexylidenebis[6-(alpha-methylbenzyl)phenol], 2,2′-methylenebis[4-methyl-6-(4-isopentyl-alpha-methylbenzyl)phenol], 2,2′-ethylidenebis(4-tert-butylphenol), 2,2′-bis(4,6-di-t-butylphenol), 2,2′-bis(4-methyl-6-tert-butylphenol) and the like.

In a highly preferred embodiment $R^2$, $R^3$, $R^4$ and $R^5$ are alkyls containing 1-12 carbon atoms. In a still more preferred embodiment $R^2$, $R^3$, $R^4$ and $R^5$ are located in the 4,6,4′,6′ positions. It is desirable that the alkyls in the 6,6′ positions are tert-alkyls containing 4-12 carbon atoms. The most preferred bisphenol is 2,2′-ethylidenebis(4,6-di-tert-butyl-phenol).

The amount of phosphorus trichloride should be at least a stoichiometric amount. This is 1.0 mole per mole of bisphenol. Phosphorus trichloride is preferably used in excess. A preferred amount is 1.0-20 moles of $PCl_3$ per mole of bisphenol. The large excess of $PCl_3$ can function as a solvent. A preferred amount of $PCl_3$ is 1.0-2.0 moles per mole of bisphenol. A still more preferred amount is 1.0-1.3 moles of $PCl_3$ per mole of bisphenol.

The reaction is catalyzed by a hydrochloride complex of a tert-amine. These tert-amines include the trialkyl amines such as trimethylamine, triethylamine, tripropylamine, diethylmethylamine, ethyldimethylamine, diethylcyclohexylamine and the like. More preferably the tert-amine is pyridine or a pyridine-type amine. Pyridine-type amines are compounds that include in their structure a pyridine ring. These compounds include pyridine, alpha-picoline, beta-picoline, gamma-picoline, quinoline, isoquinoline, 7-methyl-quinoline, 2,3-dimethyl-quinoline, lepidine, quinaldine, acridine, 2-aminopyridine, 2-phenylpyridine and the like, including mixtures thereof. The most preferred pyridine-type amine is pyridine itself. The preferred catalyst is pyridine hydrochloride.

The pyridine-type hydrochloride complex need not be added as the hydrochloride but can be added as the pyridine-type amine itself. It will form the hydrochloride complex as soon as the reaction starts. In the following discussions the catalyst will be referred to as pyridine hydrochloride but it should be understood that this term includes the other pyridine-type hydrochlorides as well as pyridine and pyridine-type compounds which form hydrochlorides in the reaction mixture.

The amount of pyridine hydrochloride is a catalytic amount. This means that the function of the pyridine is not as an HCl acceptor but is a catalytic function. Indeed, HCl will evolve from the reaction so that pyridine is not merely an HCl acceptor. The amount of pyridine used is much less than would be required to react with the HCl formed in the reaction. Reaction of one mole of a bisphenol with one mole of $PCl_3$ forms two moles of HCl so the stoichiometric amount of pyridine would be two moles per mole of bisphenol. In practice only one-half of this amount or less is used. A preferred amount of pyridine or pyridine hydrochloride is 0.01-1.5 moles per mole of bisphenol. A more preferred amount is 0.05-1.0 moles and most preferably 0.1-0.7 mole per mole of bisphenol.

The reaction is conducted at a temperature high enough to cause the reaction to proceed but not so high as to cause excessive decomposition of the reactants or products. A useful temperature range is 50-200 °C. A more preferred temperature range is 75-150 °C. Temperatures above the normal boiling point of the mixture will require a sealed reactor under pressure. It has been found that the process operates successfully without use of pressure although pressure may be used if desired. Thus, a highly preferred reaction temperature is from about 75 °C up to the reflux temperature of the reaction mixture, most preferably above about 85 °C.

On scale-up of the process it was found that the reaction rate decreased somewhat. This was found to be caused by the accumulation of HCl in the reaction system. This problem was eliminated by bringing the reaction to reflux and passing a nitrogen purge through the reactor to assist in HCl removal. The nitrogen purge may be introduced as a sparge into the liquid phase or may be introduced into the vapor phase above the liquid as an inert gas sweep. Although nitrogen was used, any other inert gas could be used with equivalent results.

The reaction is readily conducted by forming a mixture of bisphenol, $PCl_3$, pyridine or pyridine hydrochloride and inert solvent or a large excess of $PCl_3$ and stirring the reaction mixture at reaction temperature until the reaction is complete, which usually requires 1-4 hours. Product can be recovered by crystallizing or distilling. Optionally the reaction mixture can be used without further treatment to form the corresponding fluorophosphite.

The manner in which the process is conducted is illustrated in the following examples.

Example 1

In a reaction vessel was placed 10 grams (0.023 mole) of 2,2′-ethylidenebis(4,6-di-tert-butylphenol), 4.7 grams (0.034 mole) of $PCl_3$ and 20 grams of toluene. To this was added 0.5 grams (0.006 mole) of pyridine. The mixture was heated and stirred at 90 °C. Rapid HCl evolution was noted. The reaction mixture was analyzed periodically by gas chromatography (GC area percent). The following table shows the compositions excluding solvent and catalyst.

| Reaction Time (hrs) | Composition[1] (Area Percent) Bisphenol[2] | Chlorophosphite[3] |
|---|---|---|
| 1 | 1% | 92% |
| 2 | 0 | 92 |

1. The remaining product was a hydrogen phosphonate, 2,2′-ethylidenebis(4,6-di-tert-butylphenyl) hydrogen phosphonate.
2. 2,2′-ethylidenebis(4,6-di-tert-butylphenol).
3. 2,2′-ethylidenebis(4,6-di-tert-butylphenyl) chlorophosphite.

The reaction was essentially complete in one hour.

Example 2

In a glass reaction flask was placed 100 grams of 2,2′-ethylidenebis(4,6-di-tert-butylphenol) (0.228 mole), 200 grams of toluene and 47.6 grams (0.347 mole) of $PCl_3$. The mixture was stirred and heated under nitrogen. At 90 °C, 2.5 grams (0.03 mole) of pyridine was added and heating continued up to reflux (110-115 °C). A low nitrogen sweep was maintained through the flask to improve HCl removal. At the end of one hour the mixture was analyzed by GC to give the following results.

| | |
|---|---|
| 2,2′-ethylidenebis(4,6-di-tert-butylphenol) | 1% |
| 2,2′-ethylidenebis(4,6-di-tert-butylphenyl) chlorophosphite | 92% |
| hydrogen phosphonate | 7% |

Example 3

In a reaction flask was placed 50 grams of 2,2′-ethylidenebis(4,6-di-tert-butylphenol), 240 grams of carbon tetrachloride and 18 grams of $PCl_3$. Then 2 grams of pyridine were added and the stirred mixture heated to reflux (40 °C). The following table charts the reaction composition by GC.

| Reaction Time(hrs) | Composition (Area Percent) | |
|---|---|---|
| | Bisphenol | Chlorophosphite |
| 1 | 39 | 57 |
| 2 | 25 | 70 |
| 3 | 14 | 84 |
| 4 | 7 | 93 |

This reaction was much slower due to the lower reaction temperature but had the advantage that no hydrogen phosphonate by product was present in the final (4 hour) reaction mixture.

## Example 4

In a reaction flask was placed 100 grams of 2,2′-ethylidenebis(4,6-di-tert-butylphenol), 150 grams xylene, 41 grams $PCl_3$ and 4 grams of pyridine. The mixture was stirred at reflux (130-145° C) with the following results by GC.

| Reaction Time(hrs) | Composition | | |
|---|---|---|---|
| | Bisphenol | Chlorophosphite | Hydrogen Phosphonate |
| 1 | 2 | 95 | 3 |
| 2 | 0 | 97 | 3 |

## Example 5

In a reaction flask was placed 10 grams of 2,2′-ethylidenebis(4,6-di-tert-butylphenol) and 20 grams of heptane. This was stirred and heated to 90° C under nitrogen. To this was added 0.5 gram of pyridine and 3.3 grams of $PCl_3$. Stirring was continued at 90° C. The reaction composition was monitored by GC.

| Reaction Time(hrs) | Composition (Area Percent) | | |
|---|---|---|---|
| | Bisphenol | Chlorophosphite | Hydrogen Phosphonate |
| 1 | 46 | 46 | 7 |
| 2 | 35 | 61 | 5 |
| 3[1] | 33 | 62 | 6 |
| 4 | 24 | 72 | 4 |
| 5 | 18 | 77 | 4 |

1. Added additional 1.7 grams $PCl_3$.

This example shows that the process operates in an aliphatic hydrocarbon solvent but is much slower

than in an aromatic hydrocarbon solvent.

Example 6

In a reaction flask was placed 10 grams of 2,2′-ethylidenebis(4,6-di-tert-butylphenol), 4.7 grams of $PCl_3$ and 20 grams of heptane. The mixture was stirred and heated to 90° C under nitrogen. Pyridine was added incrementally during the reaction. The reaction composition was monitored by GC as follows.

| Reaction Time (hrs) | Total Pyridine Feed (g) | Composition (Area Percent) | | |
|---|---|---|---|---|
| | | Bisphenol | Chlorophosphite | Hydrogen Phosphonate |
| 1 | 0.5 | 46 | 50 | 4 |
| 2 | 1 | 34 | 60 | 7 |
| 2.5 | 1.5 | 15 | 79 | 6 |
| 3.5 | 2 | 11 | 83 | 6 |
| 4 | 2.5 | 6 | 90 | 6 |

These results show that with an aliphatic hydrocarbon solvent results are improved using programmed pyridine addition.

Example 7

For comparative purposes a run was conducted without pyridine catalyst.

In a reaction flask was placed 50 grams of 2,2′-ethylidenebis(4,6-di-tert-butylphenol) and 100 mL of heptane. The mixture was stirred and heated to 90° C under nitrogen. Then 16.4 grams of $PCl_3$ was added and stirring continued at 90° C for 3 hours. GC analysis of the reaction mixture did not show any chlorophosphite.

Example 8

In a reaction flask was placed 100 grams of 2,2′-ethylidenebis(4,6-di-tert-butylphenol), 130 grams of mixed xylenes, 10 grams of pyridine and 38 grams of $PCl_3$. The mixture was stirred and heated to reflux while maintaining a nitrogen sweep over the reaction surface to assist in HCl removal. Stirring was continued one hour at reflux. The reaction mixture was analyzed by GC and still contained a small amount of unreacted bisphenol. An additional 3 grams of $PCl_3$ was added and reflux continued an additional 30 minutes. Conversion to 2,2′-ethylidenebis(4,6-di-tert-butylphenyl) chlorophosphite was essentially complete.

The reaction mixture was subjected to a transhalogenation reaction without recovering the chlorophosphite.

To the reaction mixture was added 20 grams of high surface area potassium fluoride. Stirring was continued for one hour at reflux (135-140° C). Ammonia was then bubbled in to convert the pyridine hydrochloride catalyst to ammonium chloride which precipitated. The mixture was filtered hot and the precipitate washed with hot xylene. The combined filtrate was concentrated by distilling out 50 ml of liquid. The mixture was cooled to 5° C causing the product 2,2′-ethylidenebis(4,6-di-tertbutylphenyl) fluorophosphite to precipitate (first crop). The mother liquor was further distilled to one-half its volume and a second precipitation carried out (second crop). The precipitates were washed with cold xylene and dried under vacuum at 100° C. The product composition was as follows.

| | Amount (g) | Yield(%) | G.C. Area Percent | | |
|---|---|---|---|---|---|
| | | | Fluoro-phosphite | Bisphenol | Hydrogen Phosphonate |
| First Crop | 79 | 71 | 98 | 0.4 | 1.4 |
| Second Crop | 17 | 15 | 93 | 2.5 | 3.6 |
| Composite | 96 | 86 | | | |

## Example 9

This example shows the process using reverse addition of the bisphenol to a $PCl_3$-xylene solution.

In a reaction flask was placed 1.9 grams of $PCl_3$ and 5 grams of xylene. While stirring under nitrogen at reflux, a solution of 5 grams of 2,2′-ethylidenebis(4,6-di-tert-butylphenol), 10 grams of xylene and 0.5 gram of pyridine was added dropwise. The following table shows the reaction composition (excluding solvent and pyridine hydrochloride) 1 hour after completing the addition of the solution.

## Example 10

This example shows the use of excess $PCl_3$ as the solvent.

In a reaction flask under $N_2$ was placed 10 g of 2,2′-ethylidenebis(4,6-di-tert-butylphenol), 60 mL of $PCl_3$ and 0.1 mL of pyridine. The mixture was heated to reflux while stirring while purging with nitrogen. After 1.5 hr. a sample was analyzed by H-NMR which showed complete conversion of the starting bisphenol. The excess $PCl_3$ was distilled out and the residue heated at 210-230 °C with nitrogen sweep for 1 hour. This residue analyzed by P-NMR as 97.5 area percent 2,2′-ethylidenebis(4,6-di-tert-butylphenyl) chlorophosphite.

## Example 11

This example shows the use of a triethylamine hydrochloride catalyst.

In a reaction flask was placed 10 g. 2,2′-ethylidenebis(4,6-di-tert-butylphenol), 60 mL $PCl_3$ and 0.1 mL triethylamine. The mixture was stirred and heated at reflux while purging with nitrogen. After 5 hours the mixture was cooled and solidified. It appears that much of the excess $PCl_3$ was carried away by the nitrogen sweep at reflux even using a 3 °C reflux condenser. The semi-solid reaction mixture analyzed by P-NMR as follows.

| Compound | Area Percent |
|---|---|
| "Bisphenol"chlorophosphite | 59 |
| Phosphorus trichloride | 22 |
| Unknown Peak | 12 |

The remainder consisted of several small peaks of unknowns. It appears that although it is operable, triethylamine is not nearly as effective as pyridine.

## Claims

1. A process for making a cyclic chlorophosphite, said process comprising reacting phosphorus trichloride with a 2,2′-bridged bisphenol in an inert solvent and in the presence of a catalytic amount of a tert-amine or hydrogen chloride complex thereof.

2. A process of Claim 1 wherein said tert-amine is a pyridine-type amine and said inert solvent is an aromatic hydrocarbon having a normal boiling point in the range of 80-176 °C.

3. A process of Claim 2 wherein said solvent is toluene and said pyridine-type amine is pyridine.

4. A process of Claim 2 wherein said 2,2′-bridged bisphenol has the structure

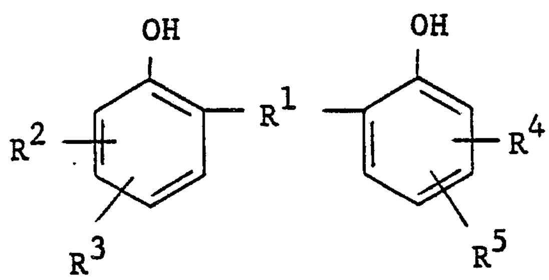

wherein $R^1$ is a divalent hydrocarbon bridge containing 1-6 carbon atoms or is absent forming a direct bond between the benzene rings and $R^2$ and $R^4$ are independently selected from alkyl groups containing 1-12 carbon atoms, cycloalkyl groups containing 5-8 carbon atoms and arylalkyl groups containing 7-12 carbon atoms and $R^3$ and $R^5$ are independently selected from hydrogen and the $R^4$ groups.

5. A process of Claim 4 wherein said solvent is toluene, xylene, or mixtures thereof, said pyridine-type amine is pyridine, and $R^2$, $R^3$, $R^4$ and $R^5$ are alkyl groups which are in the 4,6,4′ and 6′ positions respectively.

6. A process of Claim 5 wherein $R^2$, $R^3$, $R^4$ and $R^5$ are tert-butyl groups and $R^1$ is a methylene bridge.

7. A process of Claim 5 wherein $R^2$, $R^3$, $R^4$, and $R^5$ are tert-butyl groups and $R^1$ is an ethylidene bridge.

8. A process of Claim 7 wherein an inert gas purge is passed through or over the reaction mixture to assist in removing HCl.

9. A process for making 2,2′-ethylidenebis(4,6-di-tert-butylphenyl) chlorophosphite, said process comprising reacting 2,2′-ethylidenebis(4,6-di-tert-butylphenol) with at least a stoichiometric amount of phosphorus trichloride in a solvent comprising toluene, xylene or mixtures thereof at an elevated temperature of 75° up to reflux and in the presence of a catalytic amount of pyridine hydrochloride or pyridine which forms pyridine hydrochloride in the reaction, said catalytic amount being substantially less than the stoichiometric amount required to react with the HCl evolved in the reaction.

10. A process for making 2,2′-ethylidenebis(4,6 di-tert-butylphenyl) chlorophosphite, said process comprising reacting 2,2′-ethylidenebis(4,6-di-tert-butylphenol) with at least a stoichiometric amount of phosphorus trichloride in a solvent comprising toluene, xylene or mixtures thereof at an elevated temperature of 75° up to reflux and in the presence of a catalytic amount of pyridine hydrochloride, said catalytic amount being in the range of 0.05-0.5 moles per mole of 2,2′-ethylidenebis(4,6-di-tert-butylphenol).